# EUROPEAN PATENT APPLICATION

(11) **EP 1 849 518 A2**
(43) Date of publication of application: **31.10.2007**
(21) Application number: 06076694.6
(22) Date of filing: 07.09.2006
(51) Int. Cl.: B01J 2/10

(54) **Method for manufacturing granular material to be tamped on the ground and relative plant**

(30) Priority: 28.04.2006 IT RE20060054
(71) Applicant: Ing. Bonfiglioli S.p.A., 40050 Castello d'Argile (Bologna) (IT)
(72) Inventor: Bonfiglioli, Giancarlo, 40050 Castello D'Argile (Bologna) (IT)
(74) Representative: Corradini, Corrado

(57) **Abstract**

A method for manufacturing artificial granular material comprising the steps of:
- providing a rotary drum (2);
- entering earthy material containing clay into said drum (2);
- entering lime inside said drum (2);
- breaking up the earthy material and at the same time mixing it with the lime inside the drum (2) until granular material is formed;
- removing said granular material from the drum (2).

## Description

The present invention refers to a method for manufacturing granular material to be tamped on the ground and relative plant.

More specifically, the present invention refers to a method for making granular material to be spread over ground and then to be tamped to obtain a layer that has high load-bearing capacity and rigidity, so as to be substantially undeformable when heavy vehicles pass over it.

As known, the creation of asphalted roads or of railway tracks to be built on ground requires some preliminary operations that are necessary to ensure an underlying support that is stable over time.

The preliminary operations usually performed include spreading granular or powdered lime directly onto the ground on which the road surface, for example, shall be made. Nearby, the ground covered with lime is mixed through hoeing. This operation allows the lime to penetrate into the moved ground and, thanks to the humidity present in the ground itself, allows granular material made up of almost undeformable granules similar to small stones to be formed with it. In some cases it is possible to add water in relation to the amount of humidity present in the ground itself. Such granular material is good for being easily compacted during the subsequent tamping step so as to form a layer on which the road surface is to be made with the usual stratifications lying over the compacted layer of granular material.

Such a treatment allows the worked ground to be made stable over time, making it totally unaffected by the action of water (swelling and shrinking) and to freezing-thawing action, transforming the ground, containing a certain percentage of clay, into permanently "consolidated" material in order to support future loads on top.

In order to obtain an optimal stabilisation of the worked ground, it is necessary to preliminarily carry out the necessary laboratory tests on the ground to be treated, so as to establish the percentage of lime to be used.

Moreover, for the operations prior to compacting, it is necessary to use suitable machinery designed and built for the purpose, such as the adjustable dose lime spreader and the earth-lime mixer (or hoe).

Basically, it is necessary to have a set of machines comprising all of the equipment suitable for the purpose, as well as highly specialised personnel, in the application of the technology supported by a geotechnological laboratory.

Consequently, the prior art has extremely high costs that make the use of lime to stabilise ground less economically attractive, above all for small surfaces.

Therefore, there is a great need to have an alternative method for manufacturing granular material comprising lime and clay with constant characteristics, to be tamped on the ground to consolidate it, which is simple and extremely cost-effective compared to the method of the prior art, as well as a plant that allows said granular material to be manufactured, at a suitable location, even far from the place of use, ready-to-use, to be spread over the ground and then tamped, within a constructive solution that is also simple and cost-effective.

The purpose of the present invention is that of providing a method for manufacturing granular material and relative plant having characteristics such as to satisfy the aforementioned requirements and at the same time to avoid the aforementioned drawbacks with reference to the prior art.

Such a purpose is accomplished through a method for manufacturing granular material in accordance with claim 1 and relative plant in accordance with claim 10.

The dependent claims outline preferred and particularly advantageous embodiments of the method and of the plant for manufacturing granular material according to the invention.

Further characteristics and advantages of the invention shall become clear from reading the following description provided as an example and not for limiting purposes, with the help of the figures illustrated in the attached tables, in which:
- figure 1 shows a schematic side view of a plant for manufacturing granular material, according to a first embodiment of the present invention;
- figure 2 shows a partial section view taken along the line II-II of figure 1;
- figure 3 shows a section view taken along the line III-III of figure 1;
- figure 4 shows a section view taken along the line IV-IV of figure 1;
- figure 5 shows a view taken along the line V-V of figure 1 with the addition of a silo;

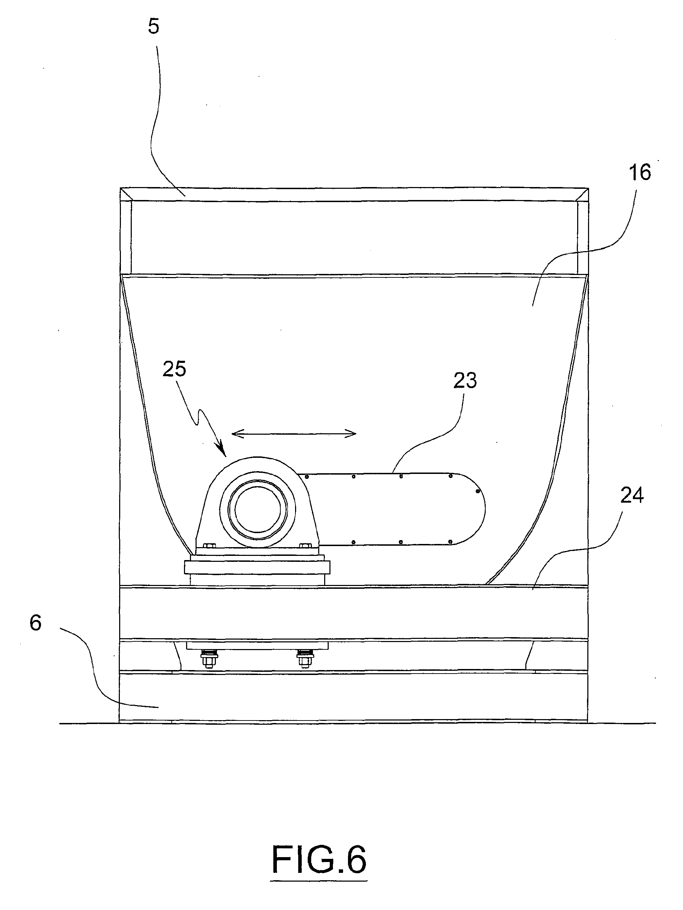

- figure 6 shows a view taken from the arrow A of figure 1;
- figure 7 shows a schematic side view of the plant, in accordance with a second embodiment of the present invention;
- figure 8 shows a section view taken along the line VIII-VIII of figure 7;
- figure 9 shows a section view taken along the line IX-IX of figure 7.

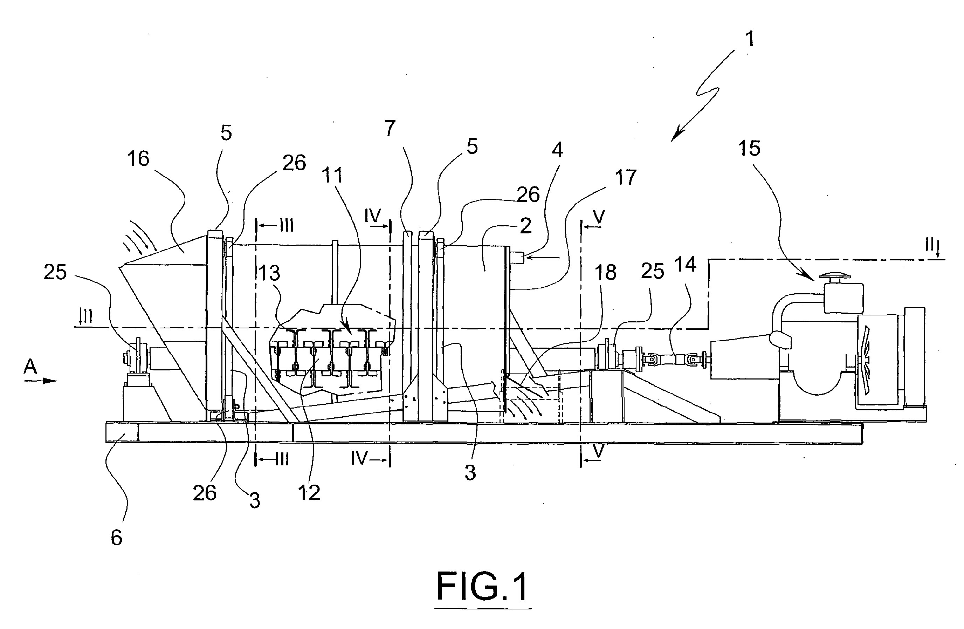

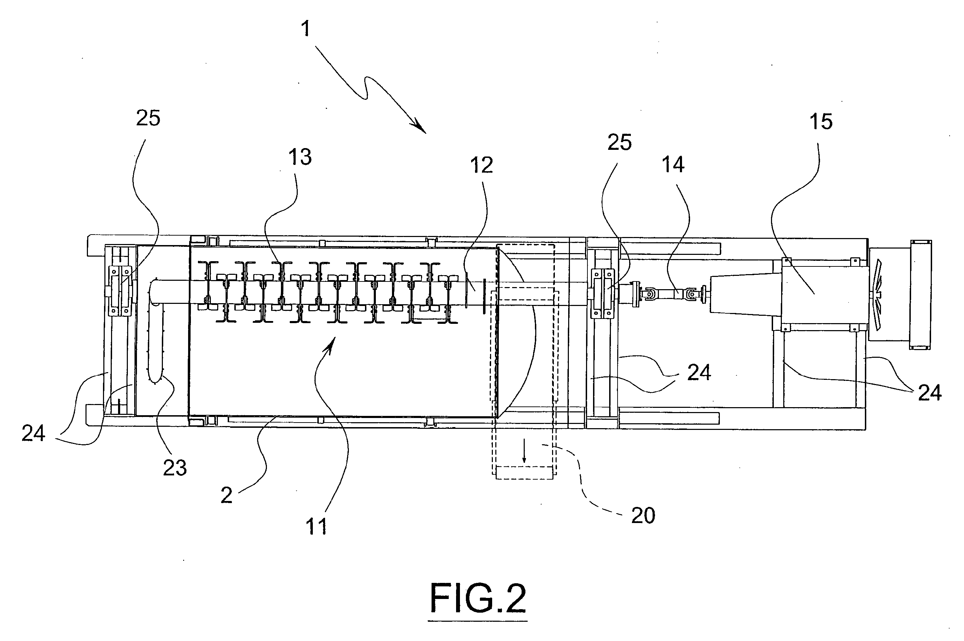

With reference to figures 1 and 2, a plant for manufacturing granular material in accordance with the first embodiment of the present finding is globally indicated with 1.

The plant 1 briefly comprises a hollow cylindrical rotary drum 2, a hopper 16 for entering ground comprising clay, means for spreading lime inside the drum 2 and mixing means arranged inside the drum to break up the ground and mix it with the lime so as to obtain the desired granular material.

In particular, in accordance with the first embodiment, the drum 2 is arranged with horizontal axis and is open at the ends.

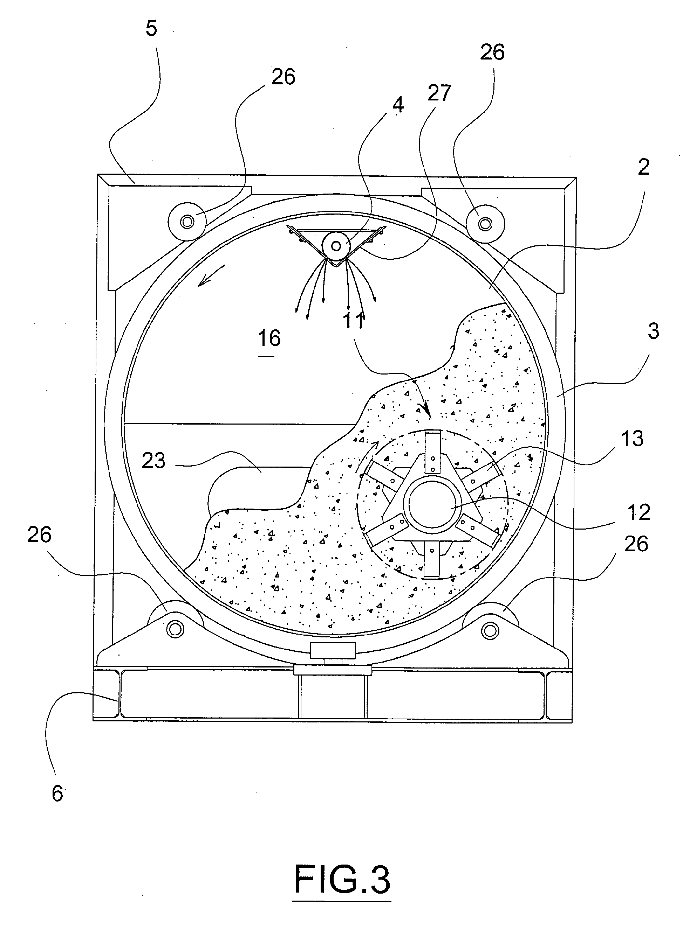

The drum 2 is provided with two crowns 3 surrounded by four idle rollers 26 arranged so as to keep the rotation axis of the drum 2 in fixed position (Fig. 3).

The rollers 26 that surround each crown 3 are rotatably fixed to a respective vertical annular frame 5 fixed to a common support base 6 of the entire plant 1.

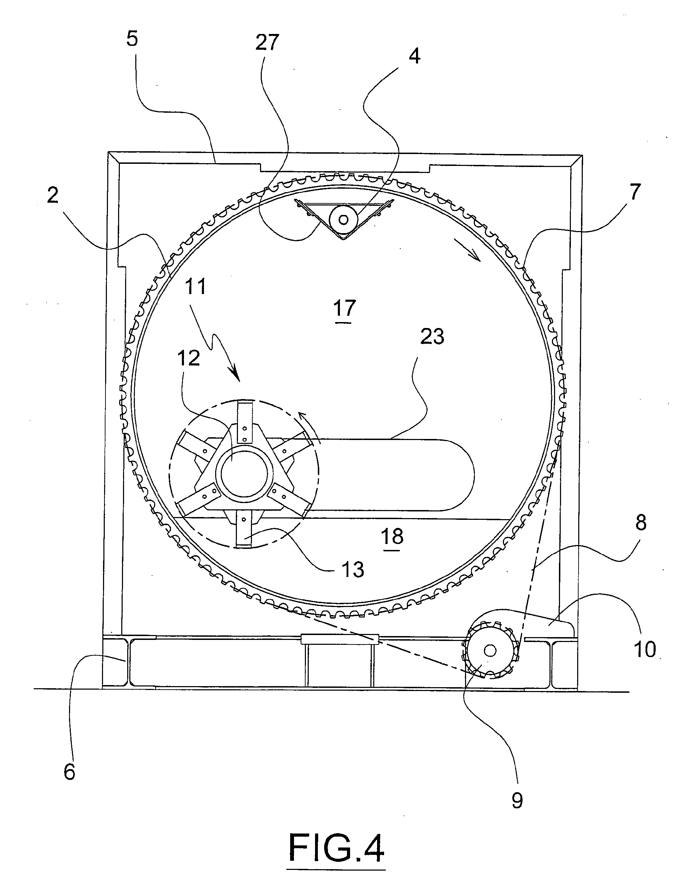

To make the drum 2 rotate, the drum 2 is provided with an outer crown wheel 7 (Fig. 4) on which a chain 8 is wound that is pulled by a toothed pulley 9, the latter being made to rotate through usual motor means 10 fixed to the base 6.

According to the first embodiment, the mixing means are in the form of a rotor 11 arranged inside the drum 2, parallel to its axis.

In particular, the rotor 11 comprises a rotation shaft 12 from which a plurality of blades 13 extend radially, having the function of breaking up the ground and mixing it with the lime.

The rotor 11 is placed in the lower half of the drum 2 (Fig. 3) with the rotation axis extending parallel to the rotation axis of the drum 2.

In order to obtain an optimal mixing of ground and lime, the diameter occupied by the blades 13 that rotate is less than the internal diameter of the drum 2 and also the ends of such blades 13 lick the inner wall of the drum 2 during rotation, without touching it however.

Purely as an example, the diameter of the drum 2 can be equal to about 2200 mm, with a length of 3800 mm, and the diameter occupied by the rotation of the blades 13 can be equal to about 800 mm.

The shaft 12 of the rotor 11 crosses the entire drum 2 coming out from both of the opposite open sides where the two opposite ends are rotatably supported by suitable supports 25. One of said ends of the shaft 12 is connected, through a Hooke's joint 14, to the shaft of a motor, in the example with a power of about 450 Hp, globally indicated with 15.

The drum 2 has two side fixed closing walls associated with it at the ends, which are arranged so as to prevent the material inside the drum 2 from spilling out without however preventing the drum 2 from rotating freely, and at the same time they have an opening through which the rotary members present in the drum 2, like the shaft 12 of the rotor 11, pass.

In accordance with the present invention, one of the two side walls comprises the hopper 16 (on the left in figure 1) having the opening facing upwards through which the ground is fed into the drum 2.

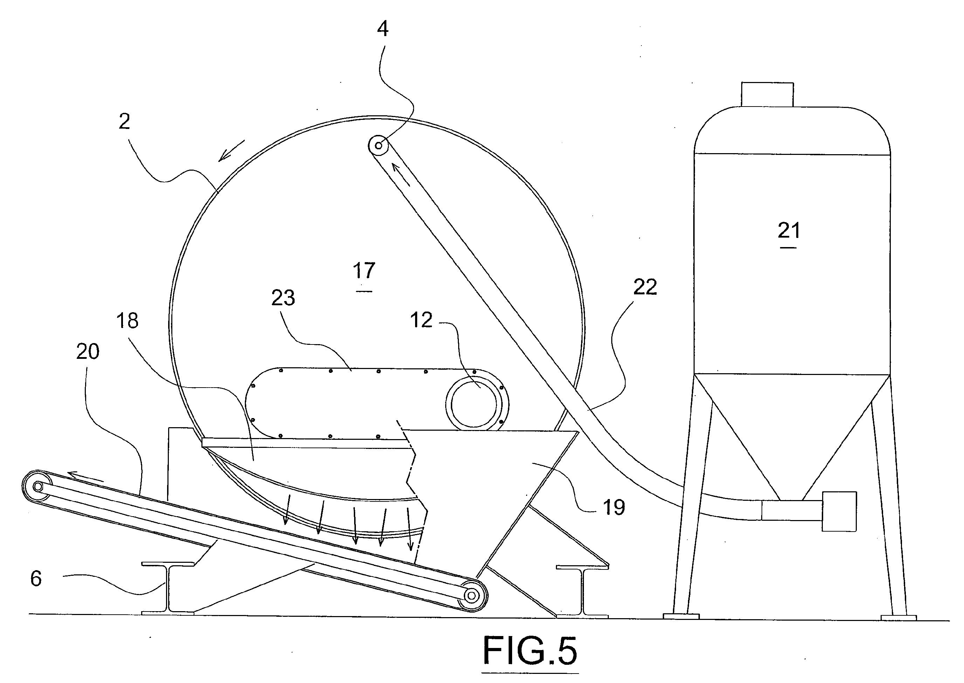

The wall opposite the hopper 16, indicated with 17, comprises an opening hatch 18 at the bottom (Fig. 5), hinged on top, through which the granular material formed inside the drum 2 is discharged. Underneath and at the hatch 18 a bottomless tank 19 is arranged on top of an inclined conveyor belt 20 for taking away the granular material coming out from the drum 2.

According to said first embodiment, the means that spread the lime (CaO) necessary for the formation of the granular material are in the form of an Archimedean screw 4 arranged in the top part of the drum 2 itself and actuated through usual motor means (not illustrated).

In particular, the Archimedean screw 4 is arranged centrally with the axis parallel to the axis of the drum 2 and it is supported by a structure 27 fixed on one side to the hopper 16 and on the other side to the wall 17 from which it projects through a hole to be connected to a lime feeding system.

The lime necessary for the formation of the granular material is stored, in the form of power, granules or chips, in a silo 21 from which it is picked up through a conveyor 22, for example of the chain type, which takes it to the Archimedean screw 4.

In order to increase the versatility of use of the plant 1, the shaft 12 of the rotor 11 can translate horizontally, always remaining parallel to the axis of the drum 2, or vice-versa, thanks to the presence of two opposite horizontal slits, suitably masked, respectively formed on the hopper 16 (Fig. 3) and on the wall 17 above the hatch 18 (Fig. 5), in which the shaft 12 can slide. Regarding this, the supports 25 and the motor 15 are able to translate in respective sliding guides 24 (Fig. 2).

Depending upon the position of the rotor 11, the plane passing through the axis of the rotation axis 12 of the rotor 11 and the rotation axis of the drum 2 has an angle of between -50° and +50° with respect to the vertical.

To prevent the material in the drum 2 from being able to spill out from said slits, it is foreseen that they be masked with suitable plates 23 perforated just at the passage of the shaft 12 of the rotor 11.

Operatively, the production of granular material takes place by entering ground, preferably with controlled humidity and comprising clay, through the hopper 16, from which the ground enters into the drum 2. The lime, coming from the silo 21, is spread through the Archimedean screw 4 inside the drum 2 in a predetermined amount, preferably between 2 and 5% by weight of the ground, more preferably in an amount equal to about 3% by weight of the ground.

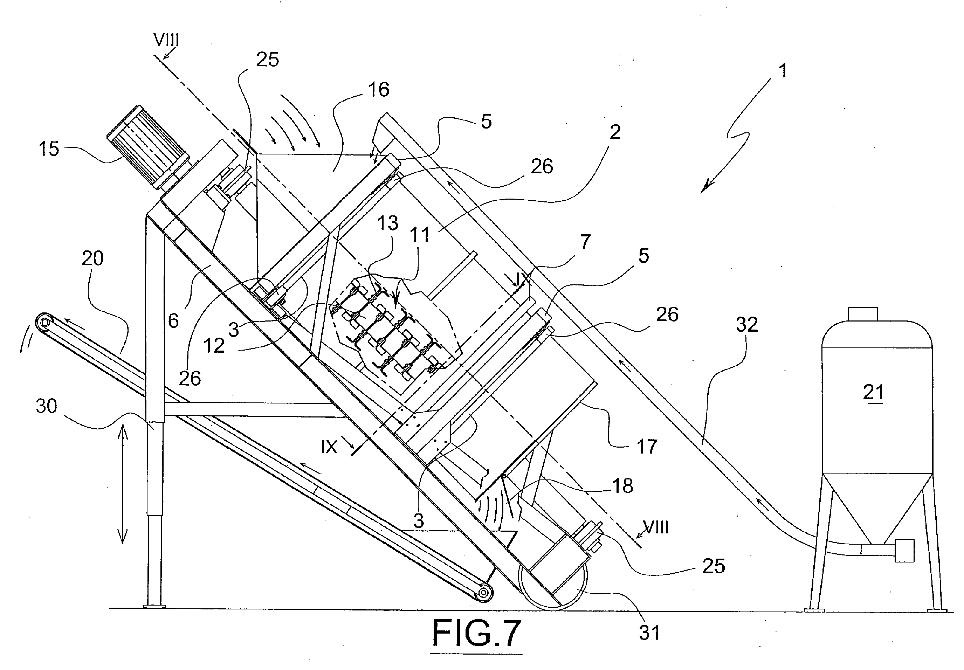

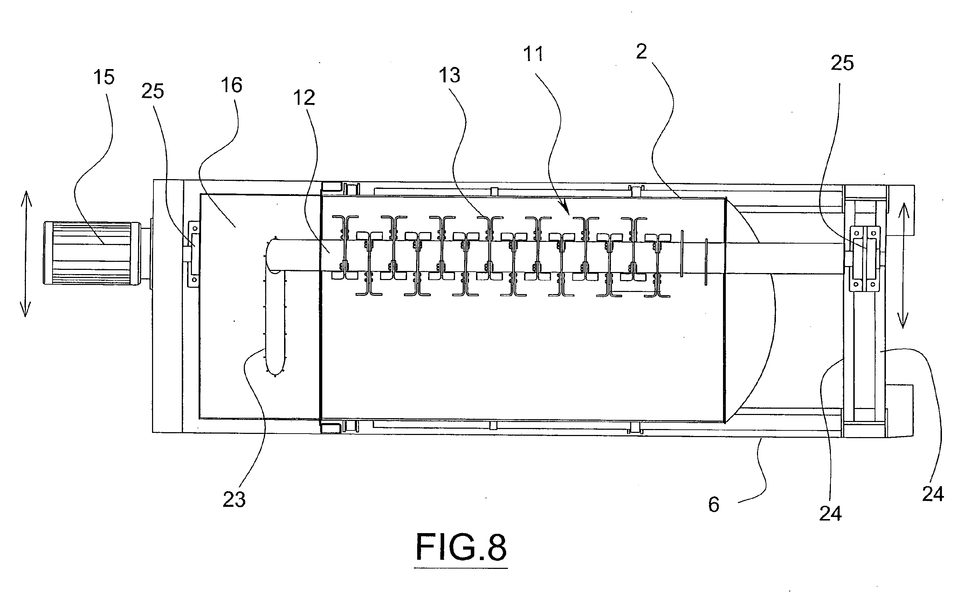

The drum 2 and the rotor 11 are actuated at different speeds; in the example, the first at low speed (2 rpm), the second at high speed (200 rpm) and counter-rotating. The mixing of the ground-lime mixture inside the drum 2 takes place for a sufficient time for the formation of the granular material. When formation is complete, the hatch 18 is opened through which the granular material is emptied out to be taken by the conveyor belt 20 to the storage point or else directly onto a trailer of a truck. In accordance with a second embodiment according to the present invention and as illustrated in figures 7 and 8, the drum 2 is arranged with the rotation axis inclined with respect to the horizontal. The inclinations can however be different for the drum 2 and the rotor 11 with respect to the horizontal.

Such an inclination is obtained by using a lifting means, for example a telescopic foot 30 actuated by a jack, which is fixed to an end of the support base 6 of the plant 1.

The end of the base 6 opposite the one fixed to the telescopic foot preferably is circular shaped 31 in order to be able to rest suitably on the floor when the height of the telescopic foot 30 and consequently the inclination of the drum 2 is varied.

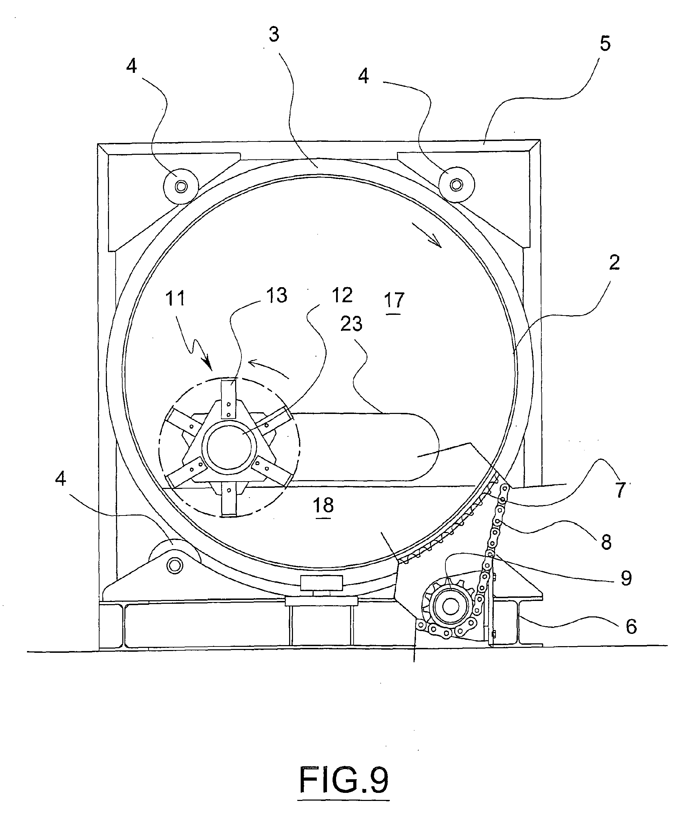

In figures 7-9, which illustrate this second embodiment, the structural elements identical to those of the first embodiment carry the same reference numerals.

In particular, the hopper 16 is situated in the high part with respect to the drum 2 and the outlet hatch 18 is in the low part. Moreover, the lime, in this case, is fed, through a conveyor 32, to the hopper 16 with which the ground is also entered.

In both embodiments, the ground is delivered to the hopper 16 through a conveyor belt, not illustrated, or another suitable means.

As can be appreciated from what has been described, the method and plant for manufacturing artificial granular material according to the present finding allow the requirements to be satisfied and allow the drawbacks mentioned in the introductory part of the present description with reference to the prior art to be overcome.

Indeed, said method and relative plant allow granular material to be made from ground that comes from a single area and that can therefore be analysed just once with a consequent substantial decrease in costs compared to the method of the prior art, which on the other hand requires all of the preliminary operations, like analysis of the ground, selection of the optimal amount of lime to be spread and subsequent mixing with the ground, to be carried out each time one operates in a different area.

Moreover, the method and plant according to the present invention make the use of lime-spreading machines and hoeing machines needed to carry out the preliminary operations of the prior art at the location in question superfluous, with a further saving of costs to buy them and for their maintenance.

It is also of note that it is easier to obtain granular material with more homogeneous characteristics thanks to the possibility of working large quantities of one sort of ground.

In addition, the plant according to the present invention can be easily installed at any location like for example in the immediate vicinity of the ground to be taken.

Of course, a man skilled in the art can bring numerous modifications and variants to the method and plant for manufacturing granular material described above in order to satisfy contingent and specific requirements, all of which are covered by the scope of protection of the invention, as defined by the following claims.

## Claims

1. Method for manufacturing artificial granular material comprising the steps of:
- providing a rotary drum (2);
- entering earthy material containing clay into said drum (2);
- entering lime inside said drum (2);
- breaking up the earthy material and at the same time mixing it with the lime inside the drum (2) until granular material is formed;
- removing said granular material from the drum (2).

2. Method according to claim 1, in which said drum (2) rotates at a speed of from 1.5 to 3 rpm.

3. Method according to claim 2, in which said drum (2) rotates at a speed of 2 rpm.

4. Method according to claim 1, in which said lime is entered in an amount of between 1 and 5% by weight with respect to the ground to be treated.

5. Method according to claim 1, in which said lime is entered into an amount equal to 3% by weight with respect to the ground to be treated.

6. Method according to claim 1, in which said breaking up and mixing are carried out by a rotor (11) equipped with radial blades (13) that rotate at a speed of between 150 and 300 rpm.

7. Method according to claim 6, in which said blades (13) rotate at a speed equal to 200 rpm.

8. Method according to claim 6, in which said rotor (11) is at least partially embedded in the earthy material during entry with lime.

9. Method according to claim 6, in which said rotor (11) counter-rotates with respect to the drum (2).

10. Plant (1) for manufacturing granular material comprising:
- a cylindrical rotary drum (2), supported by a base (6), open at the ends;
- actuation means (7, 8, 9, 10) suitable for making said drum (2) rotate;
- a first and second closing wall (16, 17) arranged so as to prevent material from spilling out from the ends of the drum (2) and without interfering with the rotation of the drum (2) itself;
- a hopper (16) to enter earthy material inside the drum (2),
- means (4; 32) for entering the lime inside the drum (2) ;
- a rotor (11) arranged inside the drum (2) to break up and mix the material entered inside the drum (2).

11. Plant (1) according to claim 10, in which said drum (2) is arranged with the rotation axis substantially horizontal.

12. Plant (1) according to claim 10, in which said drum (2) is arranged with the rotation axis inclined with respect to the horizontal.

13. Plant (1) according to claim 10, in which said actuation means (7, 8, 9, 10) comprise a crown wheel (7) fixed to the outer wall of the drum (2) and on which a chain (8) is wound pulled by a toothed pulley (9) made to rotate by motor means (10) fixed to the base (6).

14. Plant (1) according to claim 10, in which said drum (2) is provided with at least one crown (3) surrounded by idle rollers (26) arranged so as to keep the rotation axis of the drum (2) in fixed position, said rollers (26) being rotatably fixed to a frame (5) firmly connected to the base (6).

15. Plant (1) according to claim 10, in which said entry means comprise an Archimedean screw (4) arranged in the top part inside the drum (2).

16. Plant (1) according to claim 15, in which said Archimedean screw (4) has a rotation axis parallel to the rotation axis of the drum (2).

17. Plant (1) according to claim 15, in which said Archimedean screw (4) is connected with a conveyor (22) that takes the lime from a silo (21).

18. Plant (1) according to claim 10, in which said lime entry means comprise a conveyor (32) that picks up the lime from a silo (21) and enters it into the drum (2) through the hopper (16) for loading the earthy material.

19. Plant (1) according to claim 10, in which said rotor (11) comprises a rotation shaft (12), provided with radial blades (13), arranged parallel to the rotation axis of the drum (2).

20. Method according to claim 19, in which said rotation shaft (12) is arranged in the bottom part of the drum (2).

21. Method according to claim 20, in which said rotor (11) is arranged so that the blades (13) lick the inner wall of the drum (2) as it rotates without touching it.

22. Method according to claim 20, in which the blades (13) have a length such that the diameter on which they act during rotation is less than the diameter of the drum (2).

23. Plant (1) according to claim 22, in which the rotation shaft (12) of said rotor (11) can be moved horizontally.

24. Plant (1) according to claim 23, in which said first and second wall (16, 17) are respectively provided with a horizontal slit for the crossing of the rotation shaft (12) of the rotor (11), said slits being masked.

25. Method according to claim 24, in which the plane passing through the axis of the rotation shaft (12) and the rotation axis of the drum (2) has an angle of between -50° and +50° with respect to the vertical.

26. Plant (1) according to claim 10, in which said first closing wall comprises said hopper (16).

27. Plant (1) according to claim 10, in which said second wall (17) comprises a hatch (18) for the outlet of the granular material from the drum (2).

28. Plant (1) according to claim 27, in which a collection tank (19) is arranged at said hatch (18), outside of the drum (2).

29. Plant (1) according to claim 28, in which said collection tank (19) does not have a base and is arranged over a conveyor belt (20).
